# EUROPEAN PATENT SPECIFICATION

(11) **EP 3 686 049 B1**
(45) Date of publication and mention of the grant of the patent: **29.09.2021**
(21) Application number: 19219981.8
(22) Date of filing: 30.12.2019
(51) Int. Cl.: B60L 53/30

(54) **TOWING VEHICLE SYSTEM**
ZUGFAHRZEUGSYSTEM
SYSTÈME DE VÉHICULE DE REMORQUAGE

(30) Priority: 23.01.2019 JP 2019008870
(43) Date of publication of application: 29.07.2020
(73) Proprietor: Kabushiki Kaisha Toyota Jidoshokki, Kariya-shi, Aichi 448-8671 (JP)
(72) Inventor: FUJIMORI, Hiroyuki, Kariya-shi, Aichi 448-8671 (JP)
(74) Representative: TBK

(56) References cited:
- EP-A1- 2 572 922
- EP-A1- 2 927 045
- CN-A- 105 844 906
- DE-A1-102010 010 119

## Description

### BACKGROUND ART

The present disclosure relates to a towing vehicle system according to claim 1 including a towing vehicle and a towed vehicle pulled by the towing vehicle.

For example, an airport is known as a cargo workspace, where a cargo work of air cargoes for an airplane is performed. Specifically, a towing tractor corresponding to a towing vehicle pulls a trailer on which air cargoes are mounted. An operator performs a cargo work on a trailer and a conveyor.

JP 2014-158335 A discloses a towing type carrying vehicle, which has been known as a conventional technique for a towing vehicle system. The towing type carrying vehicle disclosed in JP 2014-158335 A includes a towed vehicle on which cargoes are placed and a towing vehicle travelling and pulling the towed vehicle. The towed vehicle includes a first secondary battery, a second secondary battery, and an electric motor driven by electric power. The towed vehicle includes a third secondary battery. The towing vehicle also includes a control unit controlling charge and discharge of the secondary batteries in the towing vehicle and the towed vehicle. The control unit discharges the first secondary battery, driving the electric motor by the power discharged from the first secondary battery. Furthermore, the control unit discharges the third secondary battery, charging the first secondary battery or the second secondary battery by the power discharged from the third secondary battery.

By the way, in a workspace where a cargo work is performed, automation and manpower-saving have been required considering a present situation of labor shortage. Thus, introduction of a cargo handling robot or the like is expected to promote automation and manpower-saving. To achieve this, carrying of the cargo handling robot to a cargo workspace and supplying power to the cargo handling robot are required. In a case where the cargo handling robot needs to be carried to a cargo workspace, a rechargeable cargo handling robot has a great convenience by reason that the rechargeable cargo handling robot does not need electrical wiring. However, a rechargeable cargo handling robot has a difficulty in charging in a short time. On the other hand, a towing type carrying vehicle disclosed in JP 2014-158335 A merely suppresses reduction in charge rate of the secondary battery mounted on the towing vehicle even if the towing vehicle continuously travels.

EP 2 572 922 A1 discloses a method of charging an energy storage unit.

DE 10 2010 010119 A1 discloses a transport system for transporting humans and vehicles.

CN 105 844 906 A discloses a miniature motor vehicle transportation system equipped with a public transportation vehicle and a transportation method thereof.

EP 2 927 045 A1 discloses a towing vehicle system according to the preamble of claim 1.

The present disclosure has been made in view of the above circumstances and it is an object of the invention to further develop a towing vehicle system such that it effectively charges a cargo handling robot.

### SUMMARY

This object is solved by a towing vehicle system having the features of claim 1. Advantageous further developments are defined in the dependent claims.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The disclosure, together with objects and advantages thereof, may best be understood by reference to the following description of the embodiments together with the accompanying drawings in which:
FIG. 1 is a side view schematically showing a towing vehicle system according to an embodiment of the present disclosure;
FIG. 2 is a plan view schematically showing the towing vehicle system according to the embodiment of the present disclosure;
FIG. 3 is a side view schematically showing a towed vehicle;
FIG. 4 is a plan view showing a state in which a train of towing and towed vehicles are on standby at a starting point;
FIG. 5 is a plan view showing a state in which trailers are disconnected from the train of towing and towed vehicles in a cargo workspace for loading cargoes;
FIG. 6 is a plan view showing the train of towing and towed vehicles, from which the trailers are disconnected, leaving for another cargo workspace;
FIG. 7 is a plan view showing a state in which the trailers are connected to the train of towing and towed vehicles after a cargo work in the cargo workspace is completed; and
FIG. 8 is a plan view showing a state in which the trailers are disconnected from the train of towing and towed vehicles in another cargo workspace for unloading the cargoes.

### DETAILED DESCRIPTION OF THE EMBODIMENTS

The following will describe a towing vehicle system according to an embodiment of the present disclosure with reference to the accompanying drawings. The towing vehicle system of the present embodiment is an exemplary embodiment including a towing tractor as a towing vehicle used in an airport, a towed vehicle pulled by the towing tractor, and a trailer as a carrying cart on which air cargoes are placed.

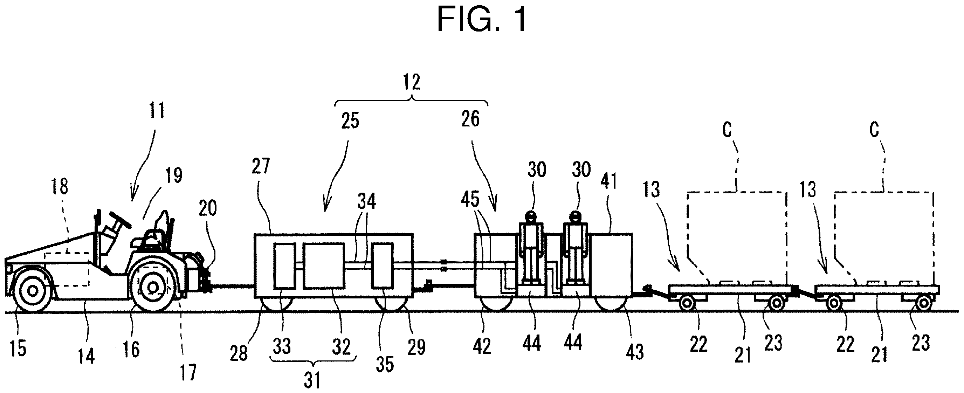

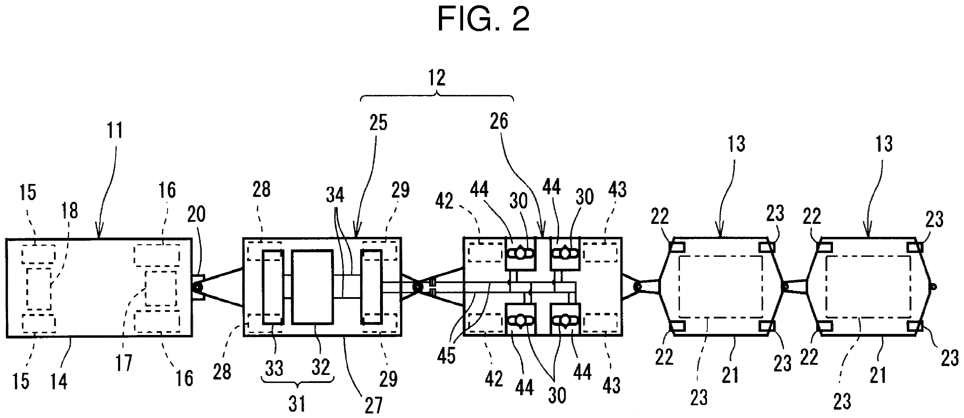

Referring to FIG. 1 and FIG. 2, the towing vehicle system of the present embodiment includes a towing tractor 11 as the towing vehicle in the present disclosure, a towed vehicle 12, and trailers 13. The towing tractor 11 has steering wheels 15 as front wheels and driving wheels 16 as rear wheels in a front portion and a rear portion of a vehicle body 14 of the towing tractor 11, respectively. An electric motor 17 for travelling and a battery 18 that is rechargeable and dischargeable are mounted on the vehicle body 14. The vehicle body 14 includes a driver's seat 19 and a drawbar device 20 disposed behind the driver's seat 19 to connect the towing tractor 11 to the towed vehicle 12 and the trailers 13.

The towed vehicle 12 will be described later in detail, and the trailers 13 as the carrying cart in the present disclosure will be firstly described. Each of the trailers 13 of the present embodiment is so-called a container dolly, on which containers C corresponding to air cargoes are mounted. The containers C correspond to objects to be loaded and unloaded in the present disclosure. Referring to FIG. 2, a vehicle body 21 of each trailer 13 includes a pair of left and right front wheels 22 and a pair of left and right rear wheels 23. The front wheels 22 and the rear wheels 23 of each of the trailers 13 are idly rotatable. In addition, the front wheels 22 may be oriented to all directions. The upper portion of the vehicle body 21 of each of the trailers 13 is a cargo bed on which the containers C are placed.

The following will describe the towed vehicle 12. The towed vehicle 12 of the present embodiment includes a power supply vehicle 25 connected to the towing tractor 11 and a cargo handling robot mounting vehicle 26 connected to the power supply vehicle 25. Referring to FIG. 2, a vehicle body 27 of the power supply vehicle 25 includes a pair of left and right front wheels 28 and a pair of left and right rear wheels 29. The front wheels 28 and the rear wheels 29 of the power supply vehicle 25 are idly rotatable. In addition, the front wheels 28 may be oriented to all directions.

A power supply device 31 as the power supply source in the present disclosure is mounted on the vehicle body 27 of the power supply vehicle 25 and configured to supply electric power to cargo handling robots 30. The power supply device 31 includes a power storage apparatus 32 and a self-power generating device 33 that self-generates electric power. The power storage apparatus 32 is, for example, a lithium ion secondary battery. The self-power generating device 33 of the present embodiment includes a power generator (not shown) and a diesel engine (not shown) driving the power generator. The vehicle body 27 of the power supply vehicle 25 has a power line 34 through which electric power from the self-power generating device 33 is supplied to the power storage apparatus 32, and electric power stored in the power storage apparatus 32 is supplied to the cargo handling robot mounting vehicle 26. A fuel cell may be used as the self-power generating device 33 instead of the power generator and the diesel engine.

A power controller 35 is mounted in the vehicle body 27 of the power supply vehicle 25. The power controller 35 has a function of adjusting electric power of the power storage apparatus 32 that is supplied to the cargo handling robot mounting vehicle 26. Specifically, the power controller 35 adjusts voltage of the supply power in accordance with a type of the cargo handling robots 30 as well as distributes electric power to the plurality of cargo handling robots 30. The vehicle body 27 of the power supply vehicle 25 includes a power line (not shown) connected to the electric motor 17 of the towing tractor 11 for travelling. Accordingly, the power controller 35 has a function of controlling supply of electric power from the power supply device 31 to the electric motor 17 of the towing tractor 11 for travelling.

The following will describe the cargo handling robot mounting vehicle 26. The cargo handling robot mounting vehicle 26 has functions of mounting the cargo handling robots 30 and of charging the cargo handling robots 30 mounted in no operation state. Referring to FIG. 2, a vehicle body 41 of the cargo handling robot mounting vehicle 26 includes a pair of left and right front wheels 42 and a pair of left and right rear wheels 43. The front wheels 42 and the rear wheels 43 of the cargo handling robot mounting vehicle 26 are idly rotatable. In addition, the front wheels 42 may be oriented to all directions.

The vehicle body 41 of the cargo handling robot mounting vehicle 26 includes in an upper portion thereof a plurality of placement portions 44 on which the cargo handling robots 30 that are rechargeable are mounted. A power-transmitting coil (not shown) that performs contactless charging of the cargo handling robots 30 is embedded in each placement portion 44. The contactless power supply method of the placement portions 44 is a magnetic resonance method. The vehicle body 41 has a power line 45 connected to the power-transmitting coil in each placement portion 44. The power line 45 is connected to the power line 34 of the power supply vehicle 25. In the present embodiment, the placement portions 44 are lowered down near a road surface to help the cargo handling robots 30 to get on and off the cargo handling robot mounting vehicle 26.

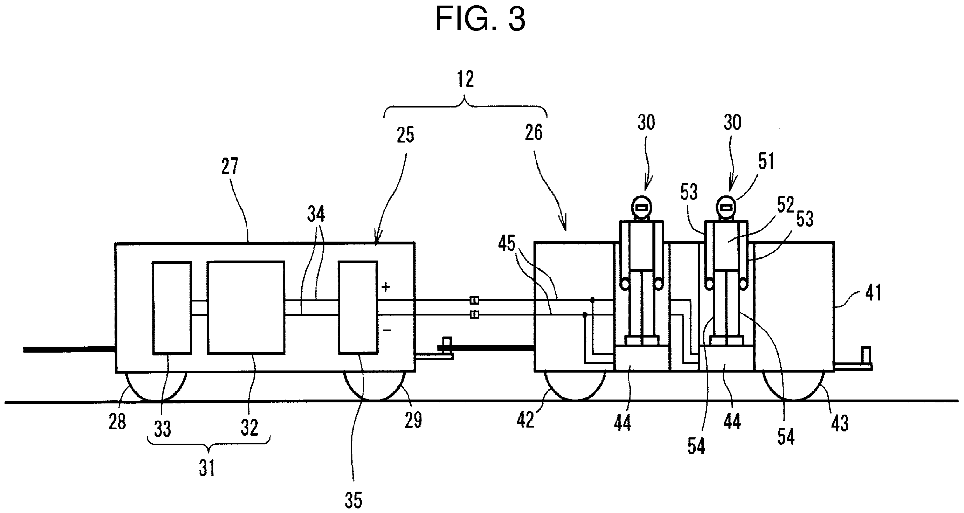

The following will describe the cargo handling robots 30. Referring to FIG. 3, each cargo handling robot 30 of the present embodiment is a biped walking humanoid and has a head portion 51, a body portion 52, arm portions 53, and leg portions 54. The cargo handling robots 30 are program-controlled so as to autonomously perform a variety of works including a predetermined cargo work. Specifically, the cargo handling robots 30 move to a workspace for a cargo work from the cargo handling robot mounting vehicle 26, and then, load the containers C to the trailers 13 and unload the containers C from the trailers 13. The cargo handling robots 30 also disconnect the trailers 13 from the train of towing and towed vehicles in which the towing tractor 11 is at the top and connect the trailers 13 to the train of towing and towed vehicles. The train of towing and towed vehicles means a vehicle group including at least the towing tractor 11 as the towing vehicle and the towed vehicle 12 pulled by the towing tractor 11.

Each cargo handling robot 30 includes an internal battery (not shown) that is rechargeable and a power-receiving coil (not shown) to receive power supply without contact. The power-receiving coil is embedded in an end portion of each leg portion 54 so as to face the power-transmitting coil for transmitting power of each placement portion 44. The power-receiving coils are connected to the internal battery by a power line (not shown). The cargo handling robots 30 on the placement portions 44 may be charged by connection with connector instead of contactless charging.

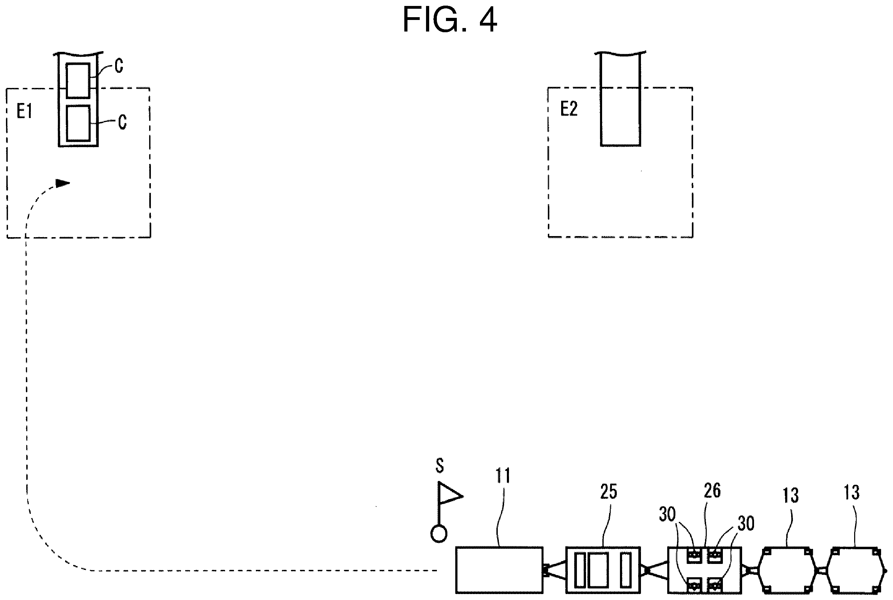

The following will describe loading and unloading by the towing vehicle system according to the present embodiment. Firstly, a case where the containers C are loaded onto the trailers 13 in a cargo workspace E1 will be described. Referring to FIG. 4, the power supply vehicle 25 is connected to the towing tractor 11, and the cargo handling robot mounting vehicle 26 is connected to the power supply vehicle 25 at a starting point S of the towing tractor 11. The plurality of trailers 13 are connected to the cargo handling robot mounting vehicle 26. The plurality of cargo handling robots 30 are mounted on the placement portions 44 of the cargo handling robot mounting vehicle 26. The plurality of trailers 13 each has no container C thereon. The cargo handling robots 30 mounted on the cargo handling robot mounting vehicle 26 are in no operation state. In this time, the contactless charging of the cargo handling robots 30 is started.

An operator travels the towing tractor 11 to the cargo workspace E1. The towing tractor 11 travels, pulling the power supply vehicle 25, the cargo handling robot mounting vehicle 26, and the plurality of trailers 13. While the towing tractor 11 travels, the cargo handling robots 30 mounted on the cargo handling robot mounting vehicle 26 are in no operation state, and the contactless charging of the cargo handling robots 30 is continued.

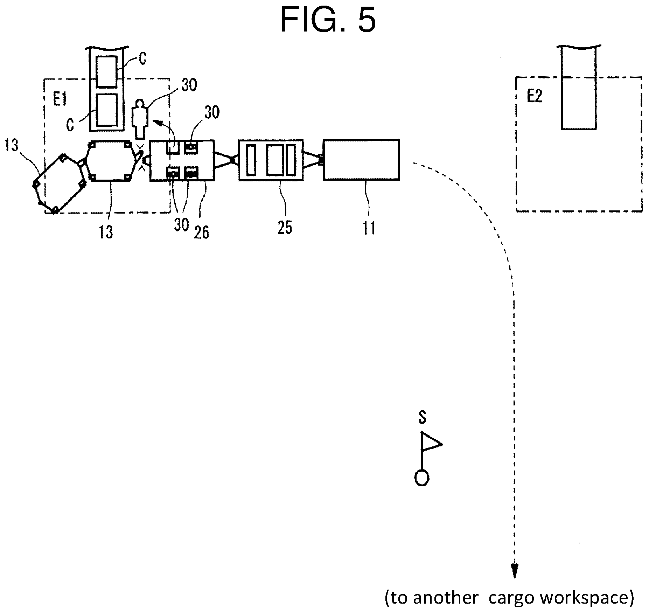

Referring to FIG. 5, when the train of towing and towed vehicles in which the towing tractor 11 is at the top arrives at the cargo workspace E1, the operator stops the train of towing and towed vehicles. After the train of towing and towed vehicles is stopped, the cargo handling robots 30 get off the cargo handling robot mounting vehicle 26. While the charge of the cargo handling robots 30 to get off is interrupted before the cargo handling robots 30 get off the cargo handling robot mounting vehicle 26, the charge of the other cargo handling robots 30 not to get off is continued. The cargo handling robots 30 that have got off disconnect the plurality of trailers 13 from the train of towing and towed vehicles. After disconnecting the plurality of trailers 13 from the train of towing and towed vehicles in the cargo workspace E1, the cargo handling robots 30 perform a cargo work for loading the containers C onto the trailers 13.

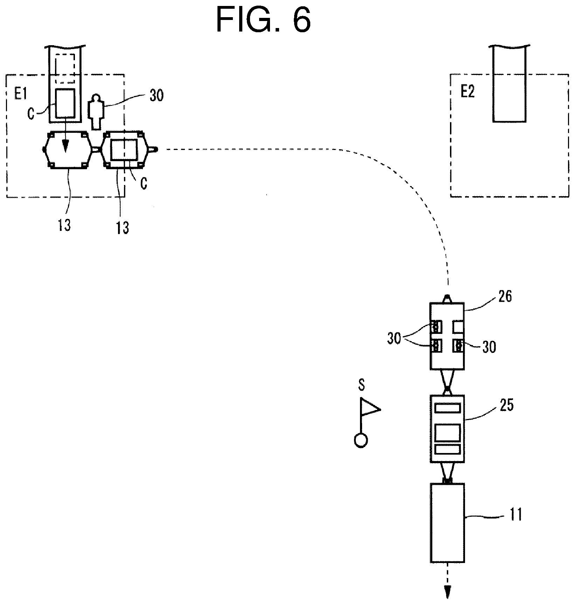

Referring to FIG. 6, the operator goes away from the cargo workspace E1 by driving the towing tractor 11 after the plurality of trailers 13 are disconnected from the train of towing and towed vehicles. The operator then goes to receive the trailers 13 on which the containers C has been loaded in another cargo workspace (not shown), or the trailers 13 on which nothing is placed. In this case, the cargo handling robots 30 mounted on the cargo handling robot mounting vehicle 26 during travelling are in no operation state so that the contactless charging of the cargo handling robots 30 is continued. When the train of towing and towed vehicles arrives at a receiving destination of the trailers 13, the operator gets the other cargo handling robots 30 off the cargo handling robot mounting vehicle 26. A connecting work of the trailers 13 is to be performed by the cargo handling robots 30 that have got off.

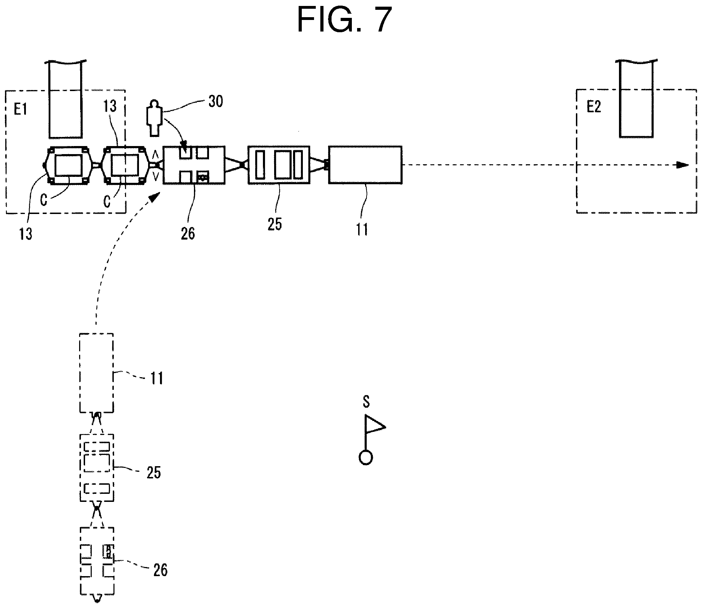

After the cargo work for loading the containers C onto the trailers 13 by the cargo handling robots 30 in the cargo workspace E1 has been completed, the operator travels the train of towing and towed vehicles in which the towing tractor 11 is at the top to the cargo workspace E1. Referring to FIG. 7, when the train of towing and towed vehicles arrives at the cargo workspace E1, the cargo handling robots 30 that have completed the cargo work connect the trailers 13 on which the containers C are loaded to the train of towing and towed vehicles. After connecting the trailers 13 to the train of towing and towed vehicles, the cargo handling robots 30 get on the placement portions 44 of the cargo handling robot mounting vehicle 26, on which nothing is placed.

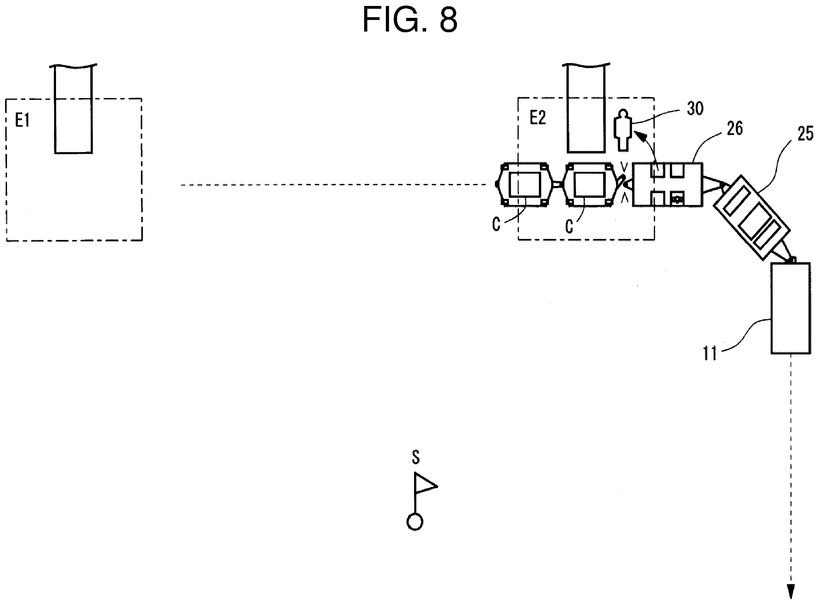

After the cargo handling robots 30 return back to the placement portions 44, the operator moves the train of towing and towed vehicles in which the towing tractor 11 is at the top to a cargo workspace E2 where the containers C are to be unloaded. Referring to FIG. 8, when the train of towing and towed vehicles arrives at the cargo workspace E2, the operator gets the cargo handling robots 30 that have been charged off the cargo handling robot mounting vehicle 26. The cargo handling robots 30 that have got off disconnect the plurality of trailers 13 from the train of towing and towed vehicles. After disconnecting the plurality of trailers 13 from the train of towing and towed vehicles in the cargo workspace E2, the cargo handling robots 30 perform a cargo work for unloading the containers C from the trailers 13.

In the present embodiment, the cargo handling robots 30 are program-controlled so as to get off the cargo handling robot mounting vehicle 26 in the cargo workspaces E1, E2. However, the cargo handling robots 30 may perform a cargo work depending on a type of the cargo handling robots 30 while remaining on the placement portions 44. In this case, the operator performs the disconnecting of the trailers 13 from the train of towing and towed vehicles and the connecting of the trailers 13 to the train of towing and towed vehicles. In an operation state in which the cargo handling robots 30 perform a cargo work, even if the cargo handling robots 30 are placed on the placement portions 44, the charging of the cargo handling robots 30 in an operation state is interrupted.

In the present embodiment, the cargo handling robots 30 mounted on the placement portions 44 in no operation state are always charged while towing tractor 11 are connected to the power supply vehicle 25. However, the present disclosure is not limited to this embodiment. Even if the towing tractor 11 is not connected to the power supply vehicle 25, the cargo handling robots 30 may be charged. In other words, regardless of whether or not the towing tractor 11 is connected to the power supply vehicle 25, the cargo handling robots 30 mounted on the placement portions 44 in no operation state may be charged.

The towing vehicle system of the present embodiment has the following advantageous effects.
(1) While the cargo handling robots 30 mounted on the placement portions 44 in the cargo handling robot mounting vehicle 26 are in no operation state, the power controller 35 controls the power supply device 31 to supply electric power to and charge the cargo handling robots 30. The cargo handling robots 30 in an operation state perform a cargo work by the charged power. After completing the cargo work, the cargo handling robots 30 are charged in the placement portions 44 in the cargo handling robot mounting vehicle 26. Accordingly, the cargo handling robots 30 are effectively charged by utilizing the no operation state, in which, for example, the cargo handling robots 30 are carried or the like. The cargo handling robots 30 may autonomously move from the cargo handling robot mounting vehicle 26 to perform a cargo work, and then, return back to the placement portions 44 after completing the cargo work, or alternatively may perform the cargo work, while remaining on the placement portions 44.
(2) The power supply vehicle 25 on which the power supply device 31 is mounted has a function of supplying power to the cargo handling robots 30. The cargo handling robot mounting vehicle 26 has a function of mounting the cargo handling robots 30 thereon. Thus, the present embodiment may provide functions separately to each of the power supply vehicle 25 and the cargo handling robot mounting vehicle 26. The towed vehicle 12 is configured of the power supply vehicle 25 and the cargo handling robot mounting vehicle 26. This configuration further reduces a turning radius of the towed vehicle 12.
(3) The power supply device 31 has the self-power generating device 33 that self-generates electric power. With this configuration, the self-power generating device 33 may generate electric power, so that the cargo handling robots 30 are always charged while the cargo handling robots 30 are mounted on the placement portions 44 in the cargo handling robot mounting vehicle 26 and are in no operation state.
(4) The trailers 13 configured to carry the containers C corresponding to the objects to be loaded and unloaded are connected to a rear portion of the cargo handling robot mounting vehicle 26 of the towed vehicle 12. This configuration shortens a distance between a position where the cargo handling robots 30 are charged and the trailers 13 around which a cargo work is performed, reducing time required for movement of the cargo handling robots 30 in a case where the cargo handling robots 30 get off the cargo handling robot mounting vehicle 26 and move to the cargo workspace E1 (E2).
(5) The cargo handling robots 30 are charged by contactless charging. This means that the power line of the cargo handling robots 30 does not need a direct contact with the power line 45 of the cargo handling robot mounting vehicle 26. In addition, the power supply vehicle 25 may supply power to the towing tractor 11, solving power shortage of the towing tractor 11.

The present disclosure is not limited to the specific embodiment described above, and may appropriately be modified within the gist of the present disclosure. For example, the following modification may be allowed.

The above embodiment is the exemplary embodiment including the towing tractor as the towing vehicle used in an airport, the towed vehicle pulled by the towing tractor, and the trailers as the carrying cart on which air cargoes are placed. However, the present disclosure is not limited to this embodiment. The towing vehicle may be, for example, a small towing vehicle used in a factory, market, and the like. The carrying cart on which cargoes other than containers are mounted may be used.

In the above embodiment, the cargo handling robots being a humanoid is used. However, the present disclosure is not limited to this embodiment. For example, an arm type robot may be used as the cargo handling robot. In this case, the arm type cargo handling robot should preferably have a mechanism for getting on and off the towed vehicle and moving. In addition, both the humanoid and the arm type robot may be mounted on the towed vehicle and charged.

In the above embodiment, the electric towing tractor is used as the towing vehicle. However, the towing tractor is of an engine type. In this case, the power line connecting between the towing tractor and the power supply vehicle is not required.

In the above embodiment, the towed vehicle includes two vehicles, namely, the power supply vehicle and the cargo handling robot mounting vehicle.

In the above embodiment, the carrying cart is connected to a rear portion of the towed vehicle. However, the present disclosure is not limited to this embodiment. The carrying cart may not be connected to the rear portion of the towed vehicle. In this case, a work for connecting and disconnecting between the towed vehicle and the carrying cart is not required.

In the above embodiment, the power supply source has the self-power generating device that self-generates electric power. However, the present disclosure is not limited to this embodiment. The power supply source may not have the self-power generating device, and may only have a power storage apparatus such as a secondary battery or the like. In this case, the power supply source should preferably be rechargeable or replaceable.

A towing vehicle system includes a towing vehicle (11) and a towed vehicle (12) pulled by the towing vehicle (11). The towed vehicle (12) includes a placement portion (44) on which a cargo handling robot (30) that is rechargeable is mounted, a power supply source (31) mounted on the towed vehicle (12) and configured to supply electric power to the cargo handling robot (30), and a power controller (35) configured to control supply of electric power from the power supply source (31). While the cargo handling robot (30) mounted on the placement portion (44) is in no operation state, the power controller (35) supplies electric power to and charges the cargo handling robot (30).

## Claims

1. A towing vehicle system comprising:
a towing tractor (11); and
a towed vehicle (12) pulled by the towing tractor (11), wherein
the towed vehicle (12) includes:
a placement portion (44) and a cargo handling robot (30) that is rechargeable and is mounted on the placement portion(44);
a power supply source (31) mounted on the towed vehicle (12) and configured to supply electric power to the cargo handling robot (30); and
a power controller (35) configured to control supply of electric power from the power supply source (31), and
while the cargo handling robot (30) mounted on the placement portion (44) is in no operation state, the power controller (35) supplies electric power to and charges the cargo handling robot (30),
wherein the towed vehicle (12) includes:
a power supply vehicle (25) on which the power supply source (31) is mounted; and
a cargo handling robot mounting vehicle (26) connected to the power supply vehicle (25) and including the placement portion (44).

2. The towing vehicle system according to claim 1, wherein
the power supply source (31) has a self-power generating device (33) that self-generates electric power.

3. The towing vehicle system according to claim 1 or 2, wherein
a carrying cart (13) configured to carry an object to be loaded and unloaded is connected to a rear portion of the towed vehicle (12).

## Patentansprüche

1. Zugfahrzeugsystem mit:
einer Zugmaschine (11); und
einem gezogenen Fahrzeug (12), das durch die Zugmaschine (11) gezogen wird, wobei
das Zugfahrzeug (12) Folgendes hat:
einen Platzierungsabschnitt (44) und einen Ladungshandhabungsroboter (30), der wiederaufladbar ist und auf dem Platzierungsabschnitt (44) montiert ist;
eine Leistungszufuhrquelle (31), die auf dem gezogenen Fahrzeug (12) montiert und konfiguriert ist, dem Ladungshandhabungsroboter (30) Leistung zuzuführen; und
eine Leistungssteuerungseinrichtung (35), die konfiguriert ist, die Zufuhr von elektrischer Leistung von der Leistungszufuhrquelle (31) zu steuern, und
während der Ladungshandhabungsroboter (30), der auf dem Platzierungsabschnitt (44) montiert ist, in einem Nichtbetriebszustand ist, die Leistungssteuerungseinrichtung (35) dem Ladungshandhabungsroboter (30) elektrische Leistung zuführt und diesen lädt,
wobei das gezogene Fahrzeug (12) Folgendes hat:
ein Leistungszufuhrfahrzeug (25), auf welchem die Leistungszufuhrquelle (31) montiert ist; und
ein Ladungshandhabungsroboter-Montagefahrzeug (26), das mit dem Leistungszufuhrfahrzeug (25) verbunden ist und den Platzierungsabschnitt (44) hat.

2. Zugfahrzeugsystem nach Anspruch 1, wobei
die Leistungszufuhrquelle (31) eine Selbstleistungserzeugungsvorrichtung (33) hat, die selbst elektrische Leistung erzeugt.

3. Zugfahrzeugsystem nach Anspruch 1 oder 2, wobei
ein Tragwagen (13), der zum Tragen eines zu be- und entladenden Objekts konfiguriert ist, mit einem hinteren Abschnitt des gezogenen Fahrzeugs (12) verbunden ist.

## Revendications

1. Système de véhicule de remorquage comprenant :
un tracteur de remorquage (11) ; et
un véhicule remorqué (12) tiré par le tracteur de remorquage (11), dans lequel :
le véhicule remorqué (12) comprend :
une partie de mise en place (14) et un robot de manipulation de marchandises (30) qui est rechargeable et est monté sur la partie de mise en place (44) ;
une source d'alimentation d'énergie (31) montée sur le véhicule remorqué (12) et configurée pour fournir l'énergie électrique au robot de manipulation de marchandises (30) ; et
un organe de commande d'alimentation (35) configuré pour commander l'alimentation d'énergie électrique depuis la source d'alimentation d'énergie (31), et
alors que le robot de manipulation de marchandises (30) monté sur la partie de mise en place (44) n'est pas dans un état de fonctionnement, l'organe de commande d'alimentation (35) fournit l'énergie électrique à et charge le robot de manipulation de marchandises (30),
dans lequel le véhicule remorqué (12) comprend :
un véhicule d'alimentation d'énergie (25) sur lequel la source d'alimentation d'énergie (31) est montée ; et
un véhicule de montage de robot de manipulation de marchandises (26) raccordé au véhicule d'alimentation d'énergie (25) et comprenant la partie de mise en place (44).

2. Système de véhicule de remorquage selon la revendication 1, dans lequel :
la source d'alimentation d'énergie (31) a un dispositif de génération automatique d'énergie (33) qui génère automatiquement l'énergie électrique.

3. Système de véhicule de remorquage selon la revendication 1 ou 2, dans lequel :
un chariot de transport (13) configuré pour transporter un objet à charger et à décharger, est raccordé à une partie arrière du véhicule remorqué (12).
